# EUROPEAN PATENT SPECIFICATION

(11) **EP 0 548 540 B1**
(45) Date of publication and mention of the grant of the patent: **25.09.1996**
(21) Application number: 92119717.4
(22) Date of filing: 19.11.1992
(51) Int. Cl.: E04G 7/30, F16B 33/00, F16L 23/032

(54) **A scaffolding connection**
Gerüstrohrverbindung
Connection pour ossature d'échafaudage

(30) Priority: 20.12.1991 GB 9127049
(43) Date of publication of application: 30.06.1993
(73) Proprietor: SGB HOLDINGS LTD., Mitcham Surrey CR4 4TQ (GB)
(72) Inventor: Papadopoulos, Demetrios Georgiou, Hounslow, Middlesex TW3 2HJ (GB)
(74) Representative: Frankland, Nigel Howard

(56) References cited:
- FR-A- 1 384 668
- US-A- 2 517 391
- US-A- 3 174 781
- US-A- 4 160 609

## Description

THE PRESENT INVENTION relates to a scaffolding connection.

It has been proposed previously to connect together scaffolding elements, such as shoring legs, by means of end plates provided on the legs. Each end plate is provided with a plurality of apertures or peripheral recesses adapted to receive bolts or other connecting means. When two scaffolding elements are to be inter-connected the plates are abutted against one another and are aligned. Consequently the apertures or recesses formed in the plates are also aligned. The bolts or the connectors may then be passed through the aligned apertures or recesses and tightened to secure the plates together.

When initially locating the plates together it is difficult to align the plates and maintain them in the aligned position. Each plate presents a flat exposed surface, and the exposed surfaces can thus move substantially freely relative to one another.

FR-A-1,384,668 discloses a scaffolding connection. Two scaffolding tubes or legs are provided. Each tube or leg has a plate secured to one end thereof. Each plate has a first surface provided with a small protruding boss which is received within the end of the tube or leg to secure the plate to the end of the tube or leg. The opposed surface of the connector presents a plurality of lands of elevated height and a plurality of other areas of a datum level. The plates are abutted against one another with the lands engaging each other. Bolts pass through the plates to secure the plates together. It is difficult to locate the plates together in the desired position since the upper surfaces of the lands, which abut each other, define a common plane.

The present invention therefore seeks to provide an improved scaffolding connection.

According to this invention there is provided a scaffolding connection comprising two co-aligned and abutted connector plates each having a first surface provided with means to secure the plate to an end of a leg, the connector plates being of identical or corresponding design, wherein one surface of each plate opposed to said first surface presents a plurality of lands of elevated height and a plurality of other areas of a datum level, wherein on each plate the means to secure the plate to the end of a leg comprise a recess, to receive one end of the leg, provided on the first surface; the lands and the areas of datum level on the plates being so located that the lands on one plate are aligned with areas of datum level on the other plate, and the plates are mated together, the lands and areas of datum level on the two plates intermeshing to maintain the plates in alignment.

Preferably the plates are identical.

Preferably each plate is of square form.

Advantageously each plate is substantially symmetrical about at least one diagonal, so that on opposite sides of the diagonal, in a mirror-image fashion, areas at datum level are "reflected" by areas at datum level, and lands at the elevated level are "reflected" by lands at the elevated height, and, across the transverse mid-lines of the plate, there is substantial non-symmetry, that is to say lands are "reflected" by areas at datum level and vice versa.

Conveniently the edges of each land on each plate are chamfered.

Advantageously each side of the plate is provided with recesses, which can receive bolts which secure the plates together.

Conveniently on each plate the said recess adapted to receive the end of the leg is provided with one or more radially inwardly directed lugs. If there is more than one lug, the lugs are located at orthogonal positions. The recess may be designed to accommodate one end of a shoring leg or other support element. The shoring leg may have a circular outer periphery defining at least four orthogonally located channels. The lugs may be inserted into the channels. The leg may be welded to the plate.

In order that the invention may be more readily understood, and so that further features thereof may be appreciated, the invention will now be described, by way of example, with reference to the accompanying drawings in which
FIGURE 1 is a perspective view of an end connector plate from above,

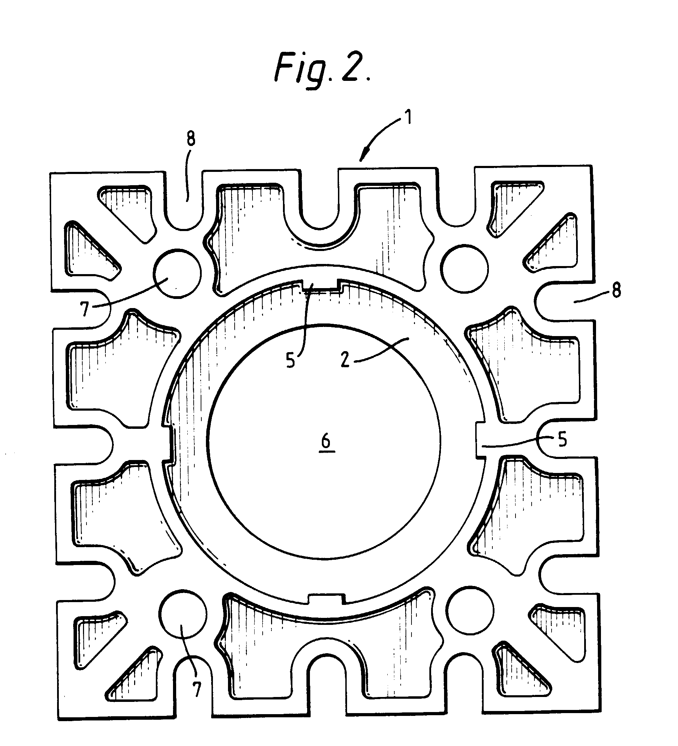

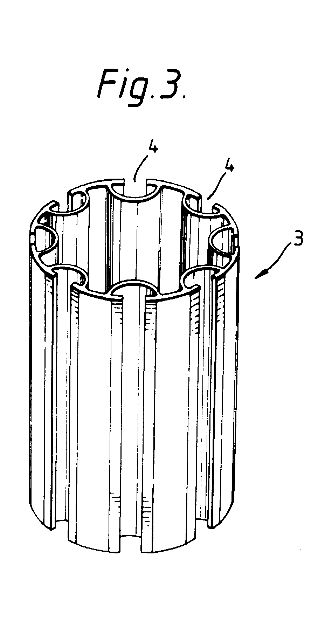

FIGURE 2 is a view of a end connector plate from beneath, and
FIGURE 3 illustrates a section of scaffolding element adapted to have the connector plate mounted thereon.

Referring to the drawings a connector plate 1 for forming a connection in accordance with the invention is of a generally square form. The under-surface of the connector plate defines a recess, 2, which is of circular form, which is adapted to receive one end of a leg 3 for a shoring system, the leg being illustrated in Figure 3. It is to be observed that the leg, as illustrated in Figure 3, presents a plurality of angularly equi-spaced slots or channels formed in the outer periphery of the leg. The leg is, however, of generally circular outer form.

The recess 2 formed in the under-side of the plate is of circular form, having a diameter slightly in excess of the diameter of the leg. However, the recess is provided with four orthogonally positioned radially inwardly directed lugs at equi-angularly spaced positions. The lugs are dimensioned to be received within four of the slots or channels formed in the leg. When one end of the leg 3 has been located within the recess 2 in the under-surface of the plate, the plate may be welded or otherwise secured to the leg.

Two legs provided with connector plates in this way may be connected by abutting the connector plates 1 together, and then using bolts or the like to secure the plates together.

As can be seen from both the bottom view and the top view of the plate 1, the plate is provided with a central aperture 6, and four apertures 7 passing through the plates dimensioned to receive bolts. The apertures 7 are located at the corners of a notional rectangle. The apertures 7 may be located at a position where bolts passing through the apertures may pass through the apertures provided in the end plate of a conventional scaffolding "soldier".

Each side of the plate 1, is provided with three equispaced recesses 8 of "U" form. These recesses are provided so that when two plates are aligned, bolts may be inserted into the recesses from the edges of the aligned plates, the bolts then being tightened to secure the plates together. Such recesses provided in a plate are of a conventional form.

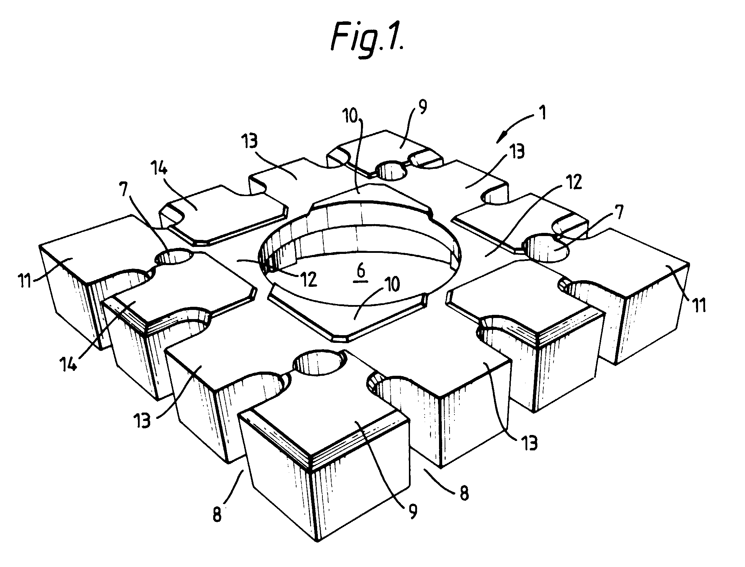

From Figure 1 it can be seen that the top surface of the plate 1, that is to say the surface that engages the corresponding surface of a similar plate when the connector plates are abutted together, plate is provided with certain selected portions or lands which are elevated above the datum level provided by the rest of the top surface of the rest of the plate.

The raised portions or lands comprise two elevated portions 9 located at diagonally opposite corners of the plate, and two further elevated portions 10 located between the said elevated portions of the diagonally opposite corners, and the central aperture 6. The remaining two diagonally opposite corners 11 establish the datum level and also an area 12 between each of the two diagonally opposite corners and the central aperture also establishes the datum level.

Considering one of the upper surfaces of the plate adjacent each side of the plate it can be seen that each side can be considered to commence with the elevated portion 9 adjacent the first diagonal corner. This elevated portion 9 extends to a point adjacent the first recess 8 formed in the side. There is then a portion 13 at the datum level extending to the next recess in each side and then a further elevated portion 14 extending to the next recess. Finally, the next portion is the portion 11 at the datum level at the opposed diagonal corner.

It can be seen that (apart from the positioning of the apertures 7) the illustrated plate possesses substantial diagonal symmetry about either diagonal. Thus, across each diagonal line, the plate is of substantially mirror-image, with each elevated portion being substantially mirrored by a corresponding elevated portion on the opposite side of the line. The bolt holes, because they are located at the corners of a rectangle, to coincide with apertures or existing soldiers, are consequently slightly off-set from the diagonal lines, and thus interrupt the symmetry of the plates about the diagonals. However, the plate is also substantially non-symmetric about either of the two transversely directed mid-lines of the plate. That is to say each elevated portion is mirrored by a region at the datum level and vice versa.

The width of the elevated portions and the regions at the datum level, particularly about the periphery of the plate, are selected to be equal and thus, if one plate is superimposed on another plate, if the elevated portions on one plate are aligned with the regions at datum level on another plate, the plates will mate together. The edges of the elevated portions are not vertical, but instead are chamfered, to assist in this mating action. As the plates mate together, the plates are brought into perfect register by the engagement of the various elevated portions and the various regions at datum level on the two plates.

Thus, by using plates as described above, on, for example, legs of a shoring system, the legs of the shoring system may be speedily co-aligned, by merely offering up two end plates to one another and then moving one end plate relative to the other until the elevated portions or lands on one plate engage with the regions of datum level of the other plate (and vice versa), the plates then being meshed together in such a way that bolts can be speedily located in position through the aligned apertures or peripheral recesses.

Whilst one particular design of plate has been described, in which the plate will mesh with the corresponding plate in one predetermined orientation and another orientation 180° off-set from that first orientation, it is possible for other designs of plate to be conceived which provide the benefits of the invention.

It is to be understood that while the invention has been particularly described above with reference to an embodiment in which two identical plates will mesh together when correctly oriented, the invention also relates to a plate which will mesh with a corresponding, although not identical, plate. The corresponding plate will have areas of datum level adapted to be positioned against the lands of the said plate and vice versa.

## Claims

1. A scaffolding connection comprising two co-aligned and abutted connector plates(1) each having a first surface provided with means(2) to secure the plate to an end of a leg(3), the connector plates being of identical or corresponding design, wherein one surface of each plate opposed to said first surface presents a plurality of lands(9,10,14) of elevated height and a plurality of other areas of a datum level(11,12,13), characterised in that on each plate the means(2) to secure the plate to the end of a leg(3) comprise a recess(2), to receive one end of the leg(3), provided on the first surface; the lands(9,10,14) and the areas of datum level(11,12,13) on the plates being so located that the lands on one plate are aligned with areas of datum level on the other plate, and the plates are mated together, the lands and areas of datum level on the two plates intermeshing to maintain the plates in alignment.

2. A connection according to Claim 1 wherein the plates(1) are identical.

3. A connection according to Claim 1 or 2 wherein the plates each present a plurality of apertures(7) and/or peripheral recesses(8) adapted to receive bolts.

4. A connection according to any one of the preceding Claims wherein the plates(1) are of square form.

5. A connection according to any one of the preceding Claims wherein each plate(1) is substantially symmetrical about at least one diagonal, so that on opposite sides of the diagonal, in a mirror-image fashion, areas at datum level(11,12,13) are "reflected" by areas(11, 12,13) at datum level, and lands(9,10,14) at the elevated level are "reflected" by lands(9,10,14) at the elevated height, and, across the transverse mid-lines of the plate, there is substantial non-symmetry, that is to say lands are "reflected" by areas at datum level and vice versa.

6. A connection according to any one of the preceding Claims wherein the edges of each land(9,10,14) on each plate are chamfered.

7. A connection according to any one of the preceding Claims wherein each side of each plate is provided with recesses, which can receive bolts which secure the plates together.

8. A connection according to any one of the preceding Claims wherein on each plate the said recess(2) to receive the end of the leg(3) is provided with one or more radially inwardly directed lugs(5).

## Patentansprüche

1. Eine Gerüstrohrverbindung mit zwei zueinander ausgerichteten und aneinandergelegten Verbindungsplatten (1), wobei jede eine erste Oberfläche aufweist, die mit Mitteln (2) zum Sichern der Platte an einem Ende eines Beines (3) versehen ist, wobei die Verbindungsplatten von identischer oder ähnlicher Gestalt sind, wobei eine Oberfläche jeder Platte gegenüberliegend zu der ersten Oberfläche mehrere Stege (9, 10, 14) mit erhöhter Höhe und mehrere andere Flächen in einer Bezugsebene (11, 12, 13) aufweist, dadurch gekennzeichnet, daß auf jeder Platte die Mittel (2) zum Sichern der Platte an dem Ende eines Beines (3) eine auf der ersten Oberfläche vorgesehene Ausnehmung (2) zum Aufnehmen eines Endes des Beines (3) umfassen; ferner die Stege (9, 10, 14) und die Flächen in der Bezugsebene (11, 12, 13) auf den Platten so angeordnet sind, daß die Stege auf einer Platte zu Flächen in der Bezugsebene auf der anderen Platte ausgerichtet sind, und die Platten zusammengepaßt sind, wobei die Stege und Flächen in der Bezugsebene auf den zwei Platten ineinandergreifen, um die Platten ausgerichtet zu halten.

2. Eine Gerüstrohrverbindung nach Anspruch 1, dadurch gekennzeichnet, daß die Platten (1) identisch sind.

3. Eine Gerüstrohrverbindung nach Anspruch 1 oder 2, dadurch gekennzeichnet, daß jede Platte mehrere Öffnungen (7) und/oder Umfangsausnehmungen (8) zum Aufnehmen von Bolzen aufweist.

4. Eine Gerüstrohrverbindung nach irgendeinem der vorangehenden Ansprüche, dadurch gekennzeichnet, daß die Platten (1) eine quadratische Gestalt aufweisen.

5. Eine Gerüstrohrverbindung nach irgendeinem der vorangehenden Ansprüche, dadurch gekennzeichnet, daß jede Platte (1) im wesentlichen symmetrisch zu wenigsten einer Diagonalen ist, so daß auf gegenüberliegenden Seiten der Diagonalen, in einer Art Spiegelbild, Flächen in der Bezugsebene (11, 12, 13) von Flächen (11, 12, 13) in der Bezugsebene "gespiegelt" werden, und Stege (9, 10, 14) auf der erhöhten Höhe von Stegen (9, 10, 14) auf der erhöhten Höhe "gespiegelt" werden, und es, quer über die Quermittellinien der Platte, im wesentlichen keine Symmetrie gibt, d.h., daß Stege von Flächen in der Bezugsebene "gespiegelt" werden und umgekehrt.

6. Eine Gerüstrohrverbindung nach irgendeinem der vorangehenden Ansprüche, dadurch gekennzeichnet, daß die Kanten jedes Steges (9, 10, 14) auf jeder Platte abgeschrägt sind.

7. Eine Gerüstrohrverbindung nach irgendeinem der vorangehenden Ansprüche, dadurch gekennzeichnet, daß jede Seite jeder Platte mit Ausnehmungen versehen ist, die Bolzen aufnehmen können, die die Platten aneinander sichern.

8. Eine Gerüstrohrverbindung nach irgendeinem der vorangehenden Ansprüche, dadurch gekennzeichnet, daß auf jeder Platte die Ausnehmung (2) zum Aufnehmen des Endes des Beines (3) mit einem oder mehreren radial nach innen gerichteten Ansatz/Ansätzen (5) versehen ist.

## Revendications

1. Une connexion pour ossature d'échafaudage comprenant deux plaques de connecteur (1) co-alignées et aboutantes ayant chacune une première surface munie de moyens (2) pour fixer la plaque à une extrémité d'une jambe (3), les plaques de connecteur étant de conception identique ou correspondante, dans laquelle une surface de chaque plaque opposée à ladite première surface présente une pluralité de secteurs (9, 10, 14) de hauteur élevée et une pluralité d'autres zones d'un niveau de référence (11, 12, 13), caractérisée en ce que sur chaque plaque les moyens (2) pour fixer la plaque à l'extrémité d'une jambe (3) comprennent un renfoncement (2) pour recevoir une extrémité de la jambe (3), prévu sur la première surface ; les secteurs (9, 10, 14) et les zones de niveau de référence (11, 12, 13) sur les plaques étant situés de telle sorte que les secteurs sur une plaque sont alignés avec des zones de niveau de référence sur l'autre plaque, et les plaques sont appariées, les secteurs et les zones de niveau de référence sur les deux plaques s'interconnectant pour maintenir les plaques en alignement.

2. Une connexion selon la Revendication 1, dans laquelle les plaques (1) sont identiques.

3. Une connexion selon la Revendication 1 ou 2, dans laquelle chacune des plaques présente une pluralité d'orifices (7) et/ou de renfoncements périphériques (8) adaptés pour recevoir des boulons.

4. Une connexion selon l'une quelconque des Revendications précédentes, dans laquelle les plaques (1) sont de forme carrée.

5. Une connexion selon l'une quelconque des Revendications précédentes, dans laquelle chaque plaque (1) est sensiblement symétrique de part et d'autre d'au moins une diagonale, de sorte que sur des côtés opposés de la diagonale, selon une image réfléchie dans un miroir, des zones au niveau de référence (11, 12, 13) sont "réfléchies" par des zones (11, 12, 13) au niveau de référence, et des secteurs (9, 10, 14) au niveau élevé sont "réfléchis" par des secteurs (9, 10, 14) à la hauteur élevée, et, par rapport à des lignes centrales transversales de la plaque il y a une dissymétrie sensible, c'est-à-dire que des secteurs sont "réfléchis" par des zones au niveau de référence et vice versa.

6. Une connexion selon l'une quelconque des Revendications précédentes, dans laquelle les bords de chaque secteur (9, 10, 14) sur chaque plaque sont chanfreinés.

7. Une connexion selon l'une quelconque des Revendications précédentes, dans laquelle chaque côté de chaque plaque est muni de renfoncements qui peuvent recevoir des boulons qui fixent les plaques ensemble.

8. Une connexion selon l'une quelconque des Revendications précédentes, dans laquelle sur chaque plaque ledit renfoncement (2) pour recevoir l'extrémité de la jambe (3) est muni d'un ou de plusieurs tenons (5) dirigés radialement vers l'intérieur.
